# EUROPEAN PATENT APPLICATION

(11) **EP 4 834 506 A1**
(43) Date of publication of application: **04.11.2026**
(21) Application number: 26173245.7
(22) Date of filing: 20.04.2026
(51) Int. Cl.: B23B 5/16

(54) **DEVICE AND METHOD FOR PEELING END OF METAL PIPE**

(30) Priority: 28.04.2025 FI 20253163
(71) Applicant: Valmet Technologies Oy, 02150 Espoo (FI)
(72) Inventor: Rauhala, Aleksi, 33900 Tampere (FI)
(74) Representative: Kolster Oy Ab

(57) **Abstract**

The peeling device (1) for peeling an end of a metal pipe comprises positioning means for positioning the device at the end of the metal pipe, and a peeling cutter (2). The positioning means is a mandrel (3) that is arranged to round the end of the pipe before performing the peeling. In use the mandrel (3) is positioned in an end of the pipe. The end of the pipe is rounded with the mandrel (3) by expanding the mandrel (3) to an expanded state. The mandrel (3) is maintained in the expanded state and the end of the pipe is peeled.

## Description

### FIELD OF THE INVENTION

The invention relates to peeling an end of a metal pipe.

The end of a metal pipe must be peeled for ensuring that the end may be properly connected by welding, for example. The metal pipe may be made of carbon steel, for example, and may have a covering of stainless steel, for example. Before welding the covering must be peeled and enough carbon steel must become visible. It must be ensured that enough covering is removed. However, the peeling must not remove too much material because the wall thickness at the end of the pipe must not be reduces excessively. Therefore, the peeling of the end of the metal pipe is a demanding task.

### BRIEF DESCRIPTION OF THE INVENTION

An object of the present invention is to provide a new solution for peeling an end of a metal pipe. The invention is characterized by what is stated in the independent claims. Some embodiments of the invention are disclosed in the dependent claims.

In the presented solution the peeling device for peeling an end of a metal pipe comprises positioning means for positioning the device at the end of the metal pipe, and a peeling cutter. The positioning means is a mandrel that is arranged to round the end of the pipe before performing the peeling. In use the mandrel is positioned in an end of the pipe. The pipe has a rather small diameter. Thus, the pipe the end of which is handled has an outer diameter smaller than 100 millimeters. The end of the pipe is rounded with the mandrel by expanding the mandrel to an expanded state. The mandrel is maintained in the expanded state, and the end of the pipe is peeled. Thereby it is ensured that the end of the pipe is round before peeling the end. This ensures that enough covering form the pipe is removed but the wall of the pipe is not made too thin. When the end of the pipe is round the mandrel touches the inner surface of the pipe in an even manner. Also, the rounding of the end of the pipe and the positioning of the device is performed with only one means. Pipes having a small diameter may be handled. The structure of the device is simple and reliable. Also, the process is performed smoothly and reliably.

According to an embodiment the mandrel comprises at least two jaw pieces and a wedge arranged to expand the at least two jaw pieces for rounding the end of the pipe, and the device comprises an actuator for moving the wedge. This solution is simple and reliable.

According to an embodiment a distance in an axial direction of the device between the peeling cutter and the mandrel is less than 20 millimeters. Thereby the mandrel is reliably positioned at the end of the metal pipe such that the rounding of the end of the pipe is ensured.

According to an embodiment the mandrel comprises at least four jaw pieces. The quite large number of jaw pieces ensures that the pipe end is evenly rounded. Also, a distance between the jaw pieces is not large even in the expanded state of the mandrel whereby the gaps between the jaw pieces do not undermine the rounding.

According to an embodiment a yield limit for the end of the pipe is determined, and the rounding of the end of the pipe is performed without exceeding the yield limit. Thereby the structure of the pipe is not harmed or weakened.

### BRIEF DESCRIPTION OF THE DRAWINGS

In the following the invention will be described in greater detail by means of some embodiments with reference to the attached drawings, in which
Figure 1 shows schematically a side view of a device for peeling an end of a metal pipe;
Figure 2 shows schematically a cross sectional side view of the device of Figure 1 along line A-A in Figure 1; and

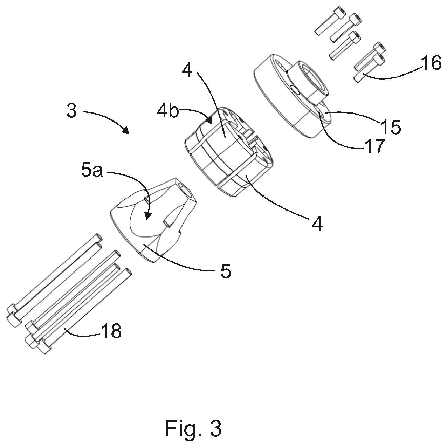

Figure 3 shows schematically an exploded view of a mandrel.

### DETAILED DESCRIPTION OF THE INVENTION

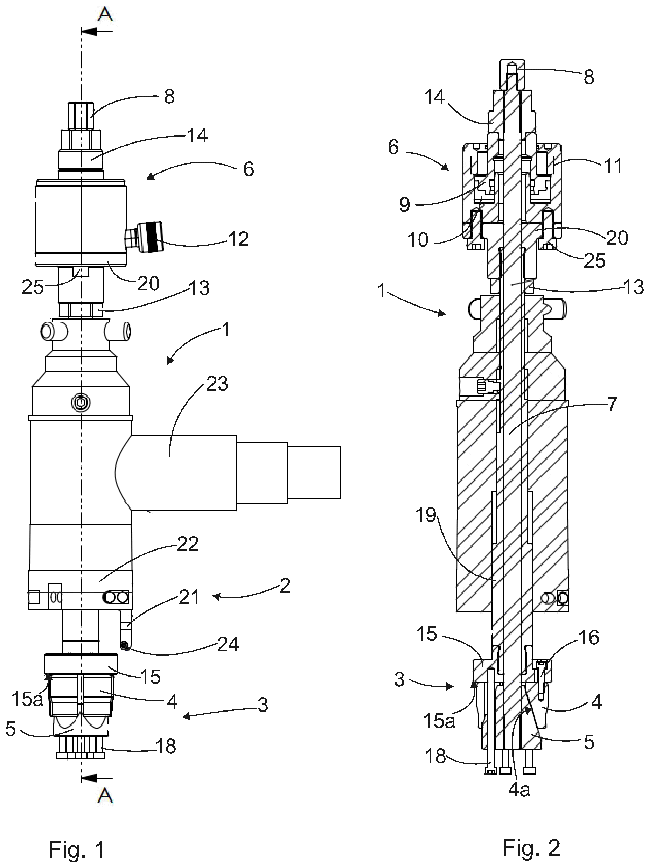

Figure 1 shows a device 1 for peeling an end of a metal pipe. The device 1 comprises a peeling cutter 2. The device 1 also comprises a mandrel 3. The device 1 is a handheld device.

In use the mandrel 3 is positioned in an end of the pipe. The end of the pipe is rounded with the mandrel 3 by expanding the mandrel 3 to an expanded state. The mandrel 3 is maintained in the expanded state while the end of the pipe is peeled by the peeling cutter 2. In addition to rounding the mandrel 3 thus acts as positioning means for positioning the device 1 at the end of the metal pipe.

If the end of the pipe is not round, then conventional positioning means does not necessarily center the device 1 correctly. If the device is not correctly centered the end result of the peeling is poor. At some parts the pipe end may be machined too much and at some part too little. Also, preferably the peeling cutter 2 machines along a round track and if the pipe end is not round also for this reason the end result of the peeling may be poor.

By rounding the pipe end by the mandrel 3 it is ensured that the end of the pipe is round before peeling the end. This ensures that enough covering form the pipe is removed but the wall of the pipe is not made too thin. Also, the rounding of the end of the pipe and the positioning of the device 1 is performed with the mandrel 3 whereby only one means is needed for performing the two different tasks.

The mandrel 3 comprises jaw pieces 4 and a wedge 5. The wedge 5 is arranged to expand the jaw pieces 4 for rounding the end of the pipe. Expanding the jaw pieces 4 and in this embodiment expanding the mandrel 2 means that the jaw pieces 4 are moved away from each other in the radial direction of the mandrel 3. In Figures 1 and 2 the jaw pieces 4 and thereby the mandrel 3 is presented in the expanded state.

The wedge 5 is moved in the axial direction of the mandrel (and in the axial direction of the device 1) by an actuator 6. The wedge 5 has wedge surfaces 5a for each jaw piece 4. Each jaw piece 4 has a wedge surface 4a that corresponds to a wedge surface 5a of the wedge 5. When the wedge 5 is moved by the actuator 6 upwards in the Figures 1 and 2 the wedge surfaces 5a expand the jaws pieces 4. Thus, the jaw pieces 4 are moved outwards in the radial direction of the mandrel 3. Each jaw piece 4 has a rounding surface 4b. The rounding surface 4b abuts against the inner surface of the pipe end when the pipe end is rounded.

Thus, the wedge 5 is in direct contact with the jaw piece 4 and when the pipe end is rounded the jaw piece 4 is in direct contact with the inner surface of the pipe end. In this context direct contact means that there are no parts or structures between the wedge 5 and the jaw piece 4 and between the jaw piece 4 and the pipe end when the pipe end is rounded.

When the wedge 5 is allowed to move downwards in the Figures 1 and 2 the jaw pieces 4 may be retracted. Thus, the jaw pieces may move inwards in the radial direction of the mandrel 3.

The mandrel 3 comprises at least two jaw pieces 4. However, the mandrel 3 may comprise three jaw pieces, four jaw pieces, five jaw pieces, or even more jaw pieces. The more jaw pieces 4 the mandrel 3 comprises the more even the end of the metal pipe may be rounded. Therefore, preferably the mandrel 3 comprises at least four jaw pieces 4 and more preferably the mandrel 3 comprises at least five jaw pieces 4. In a circumferential direction the jaw pieces 4 in their expanded state cover at least 70 % of the circumferential length of the inner surface of the pipe end. Thereby the gaps between the jaw pieces 4 do not undermine the rounding.

The wedge 5 is positioned on one end of the device 1. The wedge 5 is connected to the other end of the device 1 where the actuator 6 resides by a draw bar 7. The wedge 5 is connected to one end of the draw bar 7 by threads, for example. The other end of the draw bar 7 is provided with a drive nut 14 and a locking nut 8.

The actuator 6 comprises a piston 9. The piston 9 is moved such that it pushes the drive nut 14. Thereby the draw bar 7 pulls the wedge 5.

The actuator 6 comprises a chamber 10 inside the frame 11 of the actuator. The actuator 6 also comprises a connection 12 for pressure medium. Pressure medium is fed to the chamber 10 to make the piston 9 to move upwards in Figures 1 and 2. The pressure medium may be hydraulic fluid, for example. The pressure of the pressure medium in the chamber 10 causes the movement of the piston 9. When the pressure medium is allowed to discharge from the chamber 10 the piston 9 may move downwards in Figures 1 and 2. If the piston 9 does not move although the pressure is lowered it is possible to hit or knock the locking nut 8 to make the piston 9 and the wedge 5 to move.

In the presented solution the actuator 6 is a single acting hydraulic cylinder. It is also possible to form the actuator 6 to be a double acting cylinder and/or to provide the actuator 6 with return spring or springs. It is also possible to use other types of actuators suitable for the purpose.

The actuator 6 is attached to a cylinder holder 20 with screws 25, for example. The piston 9, the frame 11 of the actuator, and the cylinder holder 20 are hollow such that the draw bar 7 extends through them.

The mandrel 3 may comprise a fastener 15. The jaw pieces 4 are attached to the fastener 15 by screws 16, for example. The screws 16 are positioned through openings 17 in the fastener 15. The jaw pieces 4 are attached to the fastener 15 such that the jaw pieces 4 are able to move in a radial direction with respect to fastener 15. The openings 17 may be formed such that they allow the movement of the screws 16 in the radial direction. The openings 17 may be oval, for example.

The wedge 5 is attached to the fastener 15 by screws 18. The screws 18 are so long that the wedge 5 is able to move in the axial direction. It is not necessary to attach the wedge 5 to the fastener 15 because the wedge 5 is attached to the draw bar 7. However, if the draw bar 7 happens to snap, for example, the screws 18 prevent the wedge 5 from falling off.

The device 1 also comprises a hollow shaft 19. The hollow shaft goes through the frame of the peeling cutter 2 and is attached to the frame of the peeling cutter. The fastener 15 of the mandrel 3 is attached to the hollow shaft 19 by threads, for example. The cylinder holder 20 is also attached to the hollow shaft 19. The cylinder holder 20 is attached to the hollow shaft 19 by threads and a locking nut 13, for example.

The peeling cutter 2 comprises a cutter holder 21 holding a cutter piece 24. The peeling cutter 2 also comprises rotating means 22 for rotating the cutter holder 21. Pressure medium such as pressurized air is fed to the peeling cutter 2 through a connector 23 for pressurized medium. The peeling cutter 2 may thus be a pneumatic tool, for example. The peeling cutter 2 may be any type of tool such as a hydraulic tool or an electric tool, for example. The peeling cutter 2 may machine the end of the pipe along a round track. The structure and the operation of the peeling cutter 2 is not explained in a detailed manner herein because they are known to a skilled person.

When the mandrel 3 is positioned in an end of the pipe the jaw pieces 4 are positioned in the pipe end. The fastener 15 of the mandrel 3 provides a shoulder 15a. The end face of the pipe abuts the shoulder 15a when the mandrel 3 is positioned in the pipe end. Thereby the device 1 is accurately positioned in the pipe end in an axial direction of the pipe which corresponds to the axial direction of the device 1.

When the mandrel 3 is positioned in an end of the pipe the mandrel 3 is expanded to the expanded state. Thereby the end of the pipe is rounded. The device 1 also remains correctly positioned. The mandrel 3 is maintained in the expanded state and peeling of the end of the pipe is performed.

The cutter holder 21 is movable in an axial direction and it is moved such that the cutter piece 24 contacts the end of the pipe. The cutter holder 21 and the cutter piece 24 are rotated along a round track. Thereby the cutter piece 24 machines the end of the pipe such that the end of the pipe is peeled.

The jaw pieces 4 are close to the fastener 15. Thereby the mandrel 3 is reliably positioned at the end of the metal pipe such that the rounding of the end of the pipe is ensured. The jaw pieces 4 are close to the fastener 15 when the jaw pieces 4 are at a distance from the shoulder 15a which distance is less than 5 millimeters, for example.

The pipe the end of which is handled may have an outer diameter between 40 to 100 millimeters, for example. A wall thickness of such a pipe may be between 3 to 10 millimeters, for example.

Before the rounding and peeling a yield limit for the end of the pipe may be determined. For a metal pipe made of carbon steel, having a stainless-steel covering, and having an outer diameter of about 60 millimeters and a wall thickness of about 6 millimeters, the yield limit may be about 20 kN, for example.

The rounding of the end of the pipe is preferably performed without exceeding the yield limit. Thus, in the example embodiment above the mandrel 3 may be defined to direct a force that is less than 10 kN to the inner surface of the pipe end, for example. Naturally, the force to be directed to the inner surface of the pipe end must be sufficient to provide rounding of the pipe end. Thus, in the example embodiment above the mandrel 3 may be defined to direct a force that is more than 5 kN to the inner surface of the pipe end, for example.

The force the mandrel 3 directs to the inner surface of the pipe end depends on the force the actuator 6 directs to the wedge 5 and on the structure of the wedge 5 and the jaw pieces 4. The force the actuator 6 provides may depend on the pressure of the pressure medium in the chamber 10, for example.

When the jaw pieces 4 are in the expanded state the maximum distance between the rounding surfaces 4b of the jaw pieces 4 may correspond to a nominal inner diameter of the pipe end to be handled. When the jaw pieces 4 are in the retracted state the maximum distance between the rounding surfaces 4b of the jaw pieces 4 may be 2 to 10 millimeters smaller, for example, than the maximum distance between the rounding surfaces 4b of the jaw pieces 4 when the jaw pieces 4 are in the expanded state.

It will be obvious to a person skilled in the art that, as technology advances, the inventive concept can be implemented in various ways. The invention and its embodiments are not limited to the examples described above but may vary within the scope of the claims.

## Claims

1. A device for peeling an end of a metal pipe, the device (1) comprising positioning means for positioning the device (1) at the end of the metal pipe, and
a peeling cutter (2), **characterized in that** the pipe the end of which is handled has an outer diameter smaller than 100 millimeters and that
the positioning means is a mandrel (3) that is arranged to round the end of the pipe before performing the peeling.

2. A device as claimed in claim 1, wherein the mandrel (3) comprises at least two jaw pieces (4) and a wedge (5) arranged to expand the at least two jaw pieces (4) for rounding the end of the pipe, and the device (1) comprises an actuator (6) for moving the wedge (5).

3. A device as claimed in claim 2, wherein the wedge (5) is in direct contact with the jaw piece (4) and the jaw piece (4) is in direct contact with the inner surface of the pipe end when the pipe end is rounded.

4. A device as claimed in claim 3, wherein the wedge (5) has wedge surfaces (5a) for each jaw piece (4), each jaw piece (4) has a wedge surface (4a) that corresponds to a wedge surface (5a) of the wedge (5), and each jaw piece (4) has a rounding surface (4b) that abuts against the inner surface of the pipe end when the pipe end is rounded.

5. A device as claimed in any one of the claims 2 to 4, wherein the mandrel (3) comprises a fastener (15) and the jaw pieces (4) are attached to the fastener 15 such that the jaw pieces (4) are able to move in a radial direction with respect to fastener (15).

6. A device as claimed in claim 5, wherein the wedge (5) is attached to the fastener (15) such that the wedge (5) is able to move in an axial direction with respect to the fastener (15).

7. A device as claimed in claim 5 or 6, wherein the fastener (15) has a shoulder (15a) for positioning the device (1) in an axial direction and the jaw pieces (4) are close to the fastener (15).

8. A device as claimed in any one of the claims 2 to 7, wherein the actuator (6) is a single acting hydraulic cylinder

9. A device as claimed in any one of the claims 2 to 8, wherein the mandrel (6) comprises at least four jaw pieces (4).

10. A device as claimed in any one of the claims 2 to 9, wherein the wedge (5) is positioned on one end of the device (1) and the actuator (6) is positioned on the other end of the device (1), and the actuator (6) is connected to the wedge (5) by a draw bar (7) extending through a frame of the device (1).

11. A method for peeling an end of a metal pipe, the method comprising, using a peeling device comprising a mandrel and a peeling cutter, positioning the mandrel in the end of the pipe,
the pipe the end of which is handled having an outer diameter smaller than 100 millimeters,
rounding the end of the pipe with the mandrel by expanding the mandrel to an expanded state,
maintaining the mandrel in the expanded state, and
peeling the end of the pipe while maintaining the mandrel in the expanded state.

12. A method as claimed in claim 11, the method comprising
determining a yield limit for the end of the pipe, and
performing the rounding of the end of the pipe without exceeding the yield limit.
